# EUROPÄISCHE PATENTSCHRIFT

(11) **EP 2 185 612 B1**
(45) Veröffentlichungstag und Bekanntmachung des Hinweises auf die Patenterteilung: **14.09.2011**
(21) Anmeldenummer: 08784982.4
(22) Anmeldetag: 23.07.2008
(51) Int. Cl.: C08F 220/28

(54) **NICHTIONISCHE WASSERLÖSLICHE ADDITIVE AUF ALLYL- UND VINYLETHERBASIS**
NON-IONIC WATER-SOLUBLE ADDITIVES BASED ON ALLYL ETHER AND VINYL ETHER
ADDITIFS NON IONIQUES HYDROSOLUBLES À BASE D'ÉTHER DE VINYLE ET D'ALLYLE

(30) Priorität: 23.08.2007 DE 102007039785
(43) Veröffentlichungstag der Anmeldung: 19.05.2010
(73) Patentinhaber: Clariant Finance (BVI) Limited, Road Town, Tortola (VG)
(72) Erfinder: FECHNER, Björn, 65817 Eppstein (DE); SCHAEFER, Carsten, 84453 Mühldorf am Inn (DE); WÖRNDLE, Alexander, 60313 Frankfurt am Main (DE)
(74) Vertreter: Hütter, Klaus
(86) Internationale Anmeldenummer: PCT/EP2008/006023
(87) Internationale Veröffentlichungsnummer: WO 2009/024235

(56) Entgegenhaltungen:
- WO-A1-00/77058
- WO-A1-93/03099
- WO-A1-95/00565

## Beschreibung

Gegenstand der vorliegenden Erfindung sind neuartige nichtionische Copolymere, die als Dispergiermittel für wasserbasierende Pigmentpräparationen verwendet werden können, und ein Verfahren zur Herstellung dieser Copolymere.

Die bisher gebräuchlichen nichtionischen Dispergiermittel auf Novolak-Basis enthalten als Folge ihrer Herstellung Reste von Alkylphenolen, häufig Nonylphenol, und deren Ethoxylaten. Da Alkylphenolethoxylate bzw. deren Abbauprodukte in der Umwelt kaum abgebaut werden, reichem sie sich an. Dies ist problematisch, da sie auf Wasserorganismen eine hormonelle Wirkung zeigen. Daher wurden in vielen Ländern Rechtsvorschriften erlassen (z.B. 2003/53/EC), die den Einsatz von Stoffen, die Alkylphenole bzw. ihre Ethoxylate enthalten, in offenen Stoffkreisläufen beschränken bzw. verbieten.

Die US 2005 085 563 beschreibt Dispergiermittel, die durch Copolymerisation von vinyl-funktionalisierten Polyethern und Styroloxid gewonnen werden.

In EP-A-0 894 811 und EP-A-0 736 553 werden Copolymere auf Basis von ungesättigten Carbonsäurederivaten und Oxalkylenglykolalkylethem sowie einem Dicarbonsäurederivat aufgezeigt, die sich zur Verwendung in hydraulischen Bindemitteln, insbesondere Zement eignen.

In DE-A-100 17 667 wird die Verwendung solcher Copolymere zur Herstellung wässriger Pigmentpräparationen beschrieben.

Bisherige Untersuchungen haben gezeigt, dass es nach wie vor außerordentlich schwierig ist, Dispergiermittel zu synthetisieren, die nichtionischen Novolaksystemen äquivalent sind. Gefordert sind demnach neue Dispergiermittel, die organische Pigmente in hoher Konzentration von über 40 % niederviskos dispergieren können. Die Dispersionen müssen leicht herstellbar sein, d .h. die Pigmente müssen leicht benetzbar und leicht ins wässrige Medium einarbeitbar sein. Die Dispersion muss eine hohe und reproduzierbare Farbstärke aufweisen und diese über einen Zeitraum von mehreren Jahren stabil halten. Ebenfalls sollten alle weiteren coloristischen Parameter wie z. B. der Bunttonwinkel und die Reinheit reproduzierbar und stabil sein. Weiterhin muss die Dispersion über eine niedrige Viskosität verfügen; die Pigmente dürfen weder agglomerieren noch flockulieren, noch dürfen sie aufschwimmen oder sedimentieren. Die Dispersion sollte nicht schäumen bzw. keine Schaumbildung im Anwendungsmedium verursachen oder beschleunigen. Ferner sollten die Dispergiermittel zu einer breiten Verträglichkeit der Dispersionen in verschiedenen Anwendungsmedien beitragen. Zudem muss die Dispersion scherstabil sein, d .h. es darf sich unter Scherung nicht die Farbstärke oder Coloristik ändern und die Dispersion muss unter diesen Bedingungen flockulationsstabil bleiben.

Überraschenderweise wurde gefunden, dass spezielle nichtionische Kammcopolymere, die mit Hilfe von Makromonomeren aus Polyethylen-/Polypropylenglykol-Monovinylethern oder -Allylethern hergestellt werden, diese Aufgabe erfüllen.

Gegenstand der Erfindung sind daher Copolymere, erhältlich durch Polymerisation der Monomere (A), (B) und (C), wobei
(A) ein Monomer der Formel (I) ist 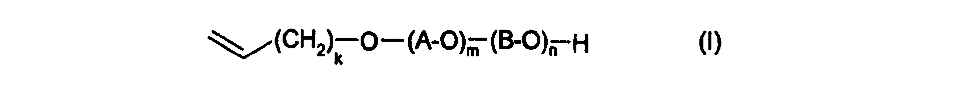 wobei
   - A: für C₂- bis C₄-Alkylen und
   - B: für ein von A unterschiedliches C₂-bis C₄-Alkylen steht,
   - k: der Zahl 0 oder 1 entspricht,
   - m: eine Zahl von 0 bis 500, vorzugsweise 0 bis 50, ist;
   - n: eine Zahl von 0 bis 500, vorzugsweise 0 bis 50, ist,
   wobei die Summe m + n gleich 1 bis 1000 ist;
(B) ein ethylenisch ungesättigtes Monomer ist, das eine aromatische Gruppe enthält; und
(C) ein ethylenisch ungesättigtes Monomer ist, das einen Alkylrest enthält. Das erfindungsgemäße Copolymer besitzt übliche endständige Gruppen, welche durch die Initiierung der radikalischen Polymerisation oder durch Kettenübertragungsreaktionen oder durch Kettenabbruchreaktionen entstehen, beispielsweise ein Proton, eine Gruppe aus einem Radikalinitiator oder eine schwefelhaltige Gruppe aus einem Kettenübertragungsreagenz.

Der molare Anteil der Monomere beträgt bevorzugt 1 bis 80 % für das Monomer (A), 0,1 bis 80 % für das Monomer (B), und 0,1 bis 80 % für das Monomer (C). Besonders bevorzugt liegt der molare Anteil der Monomere bei 10 bis 70 % für Monomer (A), bei 10 bis 60 % für Monomer (B) und bei 10 bis 60 % für Monomer (C).

Bevorzugte Monomere (A) sind solche, worin A Ethylen und B Propylen, oder A Propylen und B Ethylen bedeuten.

Die Alkylenoxideinheiten (A-O)ₘ und (B-O)ₙ können entweder statistisch oder wie im Falle einer bevorzugten Ausführungsform blockartig angeordnet vorliegen. Die Summe der Alkylenoxideinheiten kann prinzipiell n + m = 1 bis 1000 sein, bevorzugt ist 1 bis 500, insbesondere 2 bis 100, besonders bevorzugt 5 bis 100.

Bevorzugte Monomere (B) lassen sich durch die Formel (IIa) oder Formel (IIb) beschreiben: 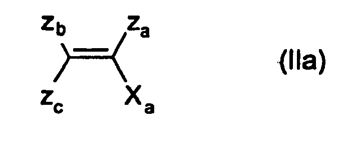 wobei
- Xₐ: für einen aromatischen oder araliphatischen Rest mit 3 bis 30 C-Atomen steht, der gegebenenfalls eines oder mehrere der Heteroatome N, O und S enthält,
- Zₐ: für H oder (C₁-C₄)-Alkyl steht,
- Z_{b}: für H oder (C₁-C₄)-Alkyl steht, und
- Z_{c}: für H oder (C₁-C₄)-Alkyl steht; 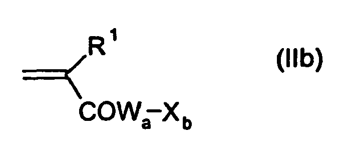
wobei
- R¹: für Wasserstoff oder Methyl steht,
- X_{b}: für einen aromatischen oder araliphatischen Rest mit 3 bis 30 C-Atomen steht, der gegebenenfalls eines oder mehrere der Heteroatome N, O und S enthält,
- Wₐ: für Sauerstoff oder die Gruppe NH steht.

Zu den Monomeren (B) gehören beispielsweise die folgenden Ester und Amide der Acrylsäure und Methacrylsäure: Phenyl, Benzyl, Tolyl, 2-Phenoxyethyl, Phenethyl.

Weitere Monomere (B) sind vinylaromatische Monomere wie Styrol und seine Derivate wie beispielsweise Vinyltoluol, alpha-Methylstyrol. Bei der aromatischen Einheit kann es sich auch um Heteroaromaten handeln, wie z. B. in 1-Vinylimidazol.

Besonders bevorzugte Monomere (B) können sein: Styrol, 1-Vinylimidazol, Benzylmethacrylat, 2-Phenoxyethylmethacrylat und Phenethylmethacrylat.

Bevorzugte Monomere (C) lassen sich durch die Formel (IIIa) oder Formel (IIIb) beschreiben: 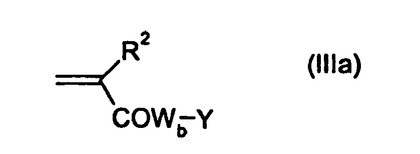 wobei
- R²: für Wasserstoff oder Methyl steht,
- Y: für einen aliphatischen Kohlenwasserstoffrest mit 1 bis 30 C-Atomen, vorzugsweise 6 bis 30, insbesondere 9 bis 20 C-Atomen, steht, der linear oder verzweigt, oder auch cyclisch sein kann, und die Heteroatome O, N und/oder S enthalten kann und auch ungesättigt sein kann,
- W_{b}: für Sauerstoff oder die Gruppe NH steht; 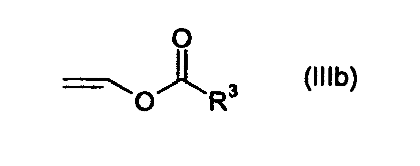
wobei
- R³: für einen aliphatischen Kohlenwasserstoffrest mit 1 bis 30 C-Atomen, vorzugsweise 6 bis 20, insbesondere 8 bis 12 C-Atomen, steht, der linear oder verzweigt, oder auch cyclisch sein kann, und die Heteroatome O, N und/oder S enthalten kann und auch ungesättigt sein kann.

Zu den Monomeren (C) gehören beispielsweise die folgenden Ester und Amide der Acrylsäure und Methacrylsäure: Methyl-, Ethyl-, Propyl-, Isopropyl-, n-Butyl-, Isobutyl-, t-Butyl-, Pentyl-, Hexyl-, 2-Ethylhexyl-, 3,3-Dimethylbutyl-, Heptyl-, Octyl-, Isooctyl-, Nonyl-, Lauryl-, Cetyl-, Stearyl-, Behenyl-, Cyclohexyl-, Trimethylcyclohexyl-, t-Butylcyclohexyl-, Bomyl-, lsobornyl-, Adamantyl-, (2,2-Dimethyl-1-methyl)propyl-, Cyclopentyl-, 4-Ethyl-cyclohexyl-, 2-Ethoxyethyl-, Tetrahydrofurfuryl- und Tetrahydropyranyl.

Des weiteren gehören zu den Monomeren (C) die Vinylester der Carbonsäuren, wie beispielsweise Laurinsäurevinylester, Myristinsäurevinylester, Stearinsäurevinylester, Behensäure-, Pivalinsäure-, Neohexansäure-, Neoheptansäure-, Neooctansäure-, Neononansäure-, Neodecansäure- und Neoundecansäurevinylester. Hierbei können ebenfalls die Vinylester aus Gemischen derartiger Carbonsäuren eingesetzt werden.

Bevorzugte Monomere (C) sind die folgenden Alkyl-Ester bzw. Alkyl-Amide der Acrylsäure und Methacrylsäure: Methyl-, Ethyl-, Propyl-, Butyl-, Isobutyl-, 2-Ethoxyethyl-, Myristyl-, Octadecyl- und besonders bevorzugt 2-Ethylhexyl- und Lauryl.

Die erfindungsgemäßen Copolymere besitzen ein Molekulargewicht von 10³ g/mol bis 10⁹ g/mol, besonders bevorzugt von 10³ bis 10⁷ g/mol, insbesondere bevorzugt 10³ bis 10⁵ g/mol.

Durch die Kombination der Monomere (A) mit den aromatischen und aliphatischen Monomeren (B) und (C) gelingt es, die Eigenschaften von novolakartigen Dispergiermitteln so nachzubilden, dass ein sehr ähnliches Eigenschaftsprofil erhalten wird.

Die Herstellung der erfindungsgemäßen Copolymere kann mittels radikalischer Polymerisation erfolgen. Die Polymerisationsreaktion kann kontinuierlich, diskontinuierlich oder semi-kontinuierlich durchgeführt werden.

Die Polymerisationsreaktion wird vorteilhafterweise als Fällungspolymerisation, Emulsionspolymerisation, Lösungspolymerisation, Substanzpolymerisation oder Gelpolymerisation geführt. Besonders vorteilhaft für das Eigenschaftsprofil der erfindungsgemäßen Copolymere ist die Lösungspolymerisation.

Als Lösungsmittel für die Polymerisationsreaktion können alle organischen oder anorganischen Lösungsmittel dienen, die sich bezüglich radikalischer Polymerisationsreaktionen weitestgehend inert verhalten, beispielsweise Ethylacetat, n-Butylacetat oder 1-Methoxy-2-propylacetat, sowie Alkohole wie z. B. Ethanol, i-Propanol, n-Butanol, 2-Ethylhexanol oder 1-Methoxy-2-propanol, ebenfalls Diole wie Ethylenglykol und Propylenglykol. Auch können Ketone wie Aceton, Butanon, Pentanon, Hexanon und Methylethylketon, Alkylester der Essig-, Propion- und Buttersäure wie beispielsweise Ethylacetat, Butylacetat und Amylacetat, Ether wie Tetrahydrofuran, Diethylether und Ethylenglykol- und Polyethylenglykol-monoalkylether und -dialkylether verwendet werden. Ebenso können aromatische Lösungsmittel wie z. B. Toluol, Xylol oder höher siedende Alkylbenzole eingesetzt werden. Ebenfalls ist der Einsatz von Lösungsmittelgemischen denkbar, wobei sich die Wahl des Lösungsmittels oder der Lösungsmittel nach dem Einsatzzweck des erfindungsgemäßen Copolymeren richtet. Bevorzugt Verwendung finden Wasser; niedere Alkohole; bevorzugt Methanol, Ethanol, Propanole, iso-, sec.- und t-Butanol, 2-Ethylhexanol, Butylglykol und Butyldiglykol, insbesondere bevorzugt iso-Propanol, t-Butanol, 2-Ethylhexanol, Butylglykol und Butyldiglykol; Kohlenwasserstoffe mit 5 bis 30 Kohlenstoffatomen und Mischungen und Emulsionen der vorgenannten Verbindungen.

Besonders bevorzugte Lösemittel sind Methylethylketon, Methylisobutylketon, Isopropanol.

Die Polymerisationsreaktion erfolgt bevorzugt im Temperaturbereich zwischen 0 und 180 °C, besonders bevorzugt zwischen 10 und 100 °C, sowohl bei Normaldruck als auch unter erhöhtem oder erniedrigtem Druck. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder die üblichen, chemischen Polymerisationsinitiatoren wie organische Peroxide, z. B. Benzoylperoxid, tert.-Butylhydroperoxid, Methylethylketon-peroxid, Cumoylperoxid, Dilauroylperoxid (DLP) oder Azoinitiatoren, wie z. B. Azodiisobutyronitril (AIBN), Azobisamidopropyl-hydrochlorid (ABAH) und 2,2'-Azobis(2-methylbutyronitril) (AMBN) verwendet werden. Ebenfalls geeignet sind anorganische Peroxyverbindungen, wie z. B. (NH₄)₂S₂O₈, K₂S₂O₈ oder H₂O₂, gegebenenfalls in Kombination mit Reduktionsmitteln (z. B. Natriumhydrogensulfft, Ascorbinsäure, Eisen(II)sulfat) oder Redoxsystemen, welche als reduzierende Komponente eine aliphatische oder aromatische Sulfonsäure (z. B. Benzolsulfonsäure, Toluolsulfonsäure) enthalten.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat und einige Halogenverbindungen, wie z. B. Tetrachlorkohlenstoff, Chloroform und Methylenchlorid.

Ein weiterer Gegenstand der vorliegenden Erfindung ist die Verwendung des erfindungsgemäßen Copolymers als Dispergiermittel, insbesondere für Pigmente und Füllstoffe, z. B. bei der Herstellung von wasserbasierenden Pigmentkonzentraten, die zum Einfärben von Dispersions- und Lackfarben, Anstrichmitteln, Beschichtungsstoffen und Druckfarben verwendet werden, sowie zum Einfärben von Papier, Kartonagen und Textilien.

### Synthesebeispiele

### Synthesevorschrift 1

In einem Kolben mit Rührer, Rückflusskühler, Innenthermometer und Stickstoffeinleitung wurde das Monomer A, Monomer C und ggf. der Molekulargewichtsregler in Lösungsmittel unter Stickstoffeinleitung vorgelegt. Dann wurde die Temperatur unter Rühren auf 80 °C gebracht und innerhalb einer Stunde eine Lösung des Initiators zudosiert. Gleichzeitig wurde mit dem Dosieren von Monomer B begonnen, das nach 3 Stunden abgeschlossen wurde. Im Anschluss wurde noch für 2 Stunden bei dieser Temperatur weitergerührt, dann das Lösemittel im Vakuum entfernt.

### Synthesevorschrift 2

In einem Kolben mit Rührer, Rückflusskühler, Innenthermometer und Stickstoffeinleitung wurde das Monomer A, Monomer C und ggf. der Molekulargewichtsregler und Komponente 1 (Ascorbinsäure) des Redoxinitiatorsystems in Lösungsmittel unter Stickstoffeinleitung vorgelegt. Dann wurde die Temperatur unter Rühren auf 80 °C gebracht und innerhalb von drei Stunden eine Lösung der Komponente 2 (t-BuOOH) des Redoxinitiatorsystems zudosiert. Gleichzeitig wurde mit dem Dosieren von Monomer B begonnen, das nach 3 Stunden abgeschlossen wurde. Im Anschluss wurde noch für 2 Stunden bei dieser Temperatur weitergerührt, dann das Lösemittel im Vakuum entfernt.

Die folgenden drei Tabellen enthalten Synthesebeispiele analog den obigen zwei allgemeinen Synthesevorschriften.

AMBN = 2,2'-Azobis(2-methylbutyronitril

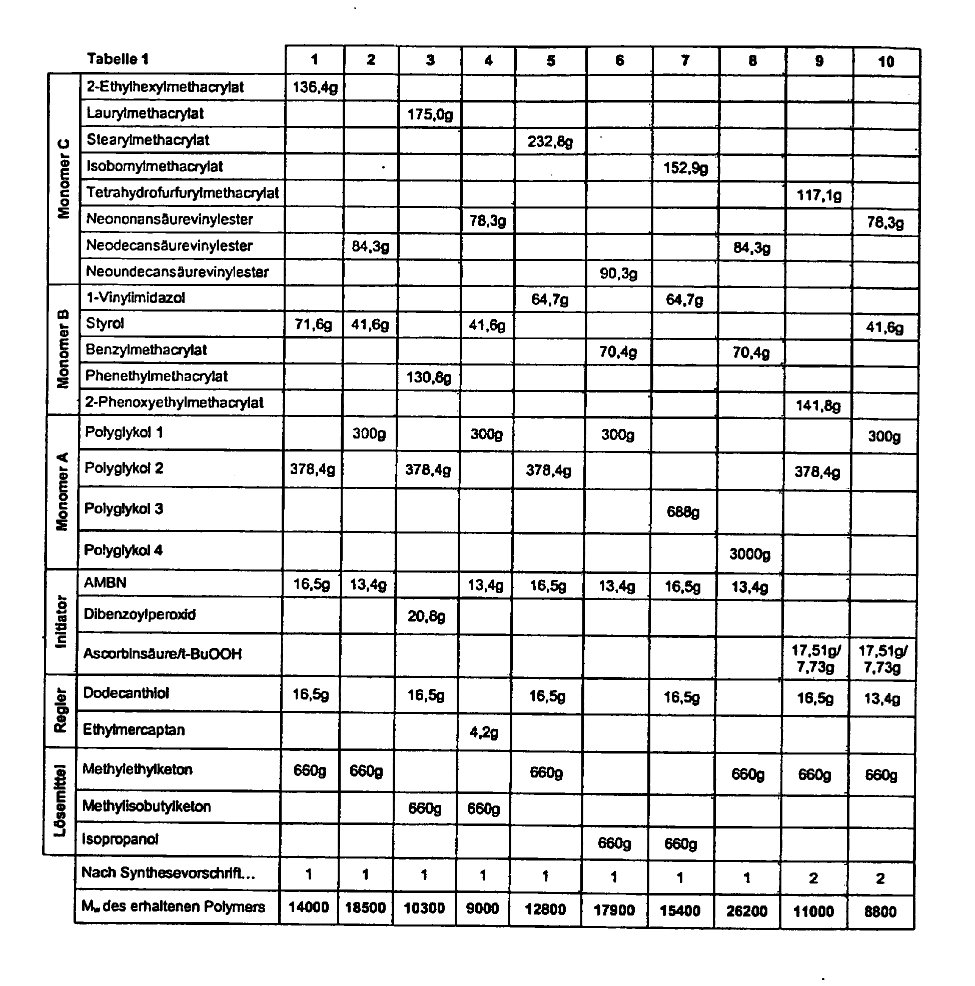

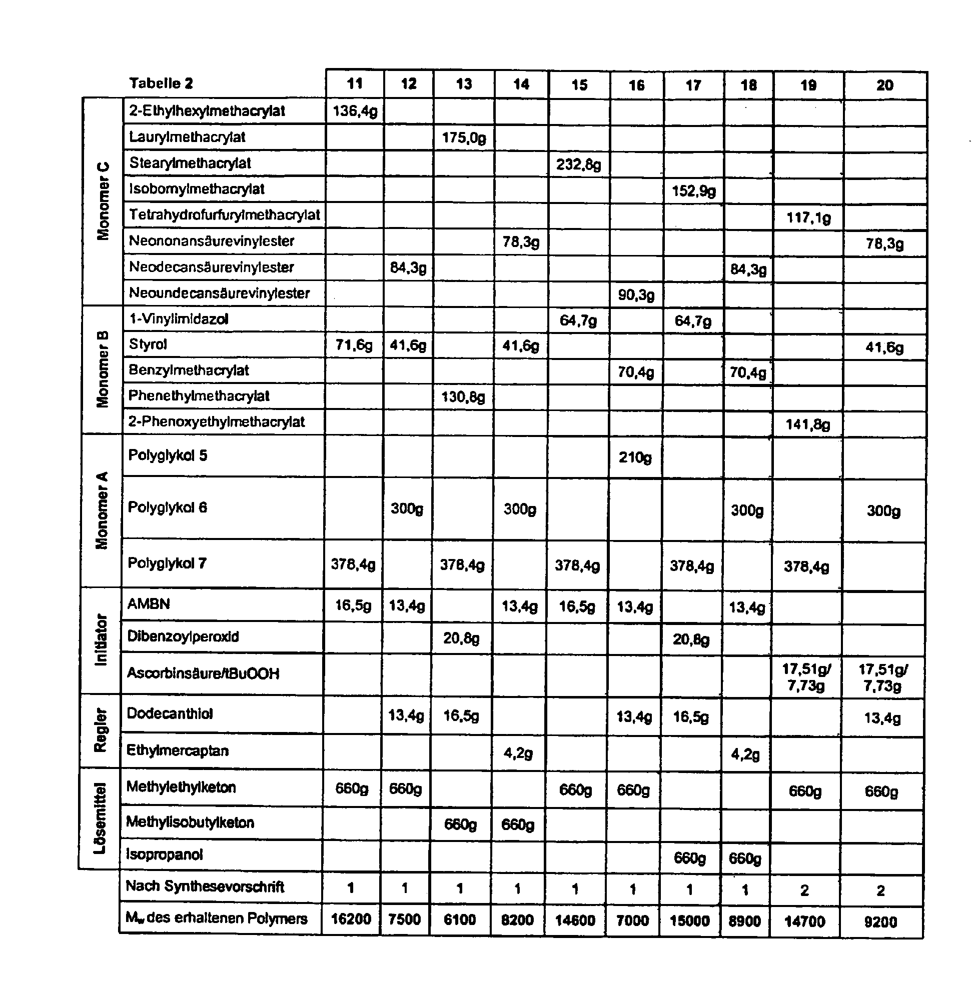

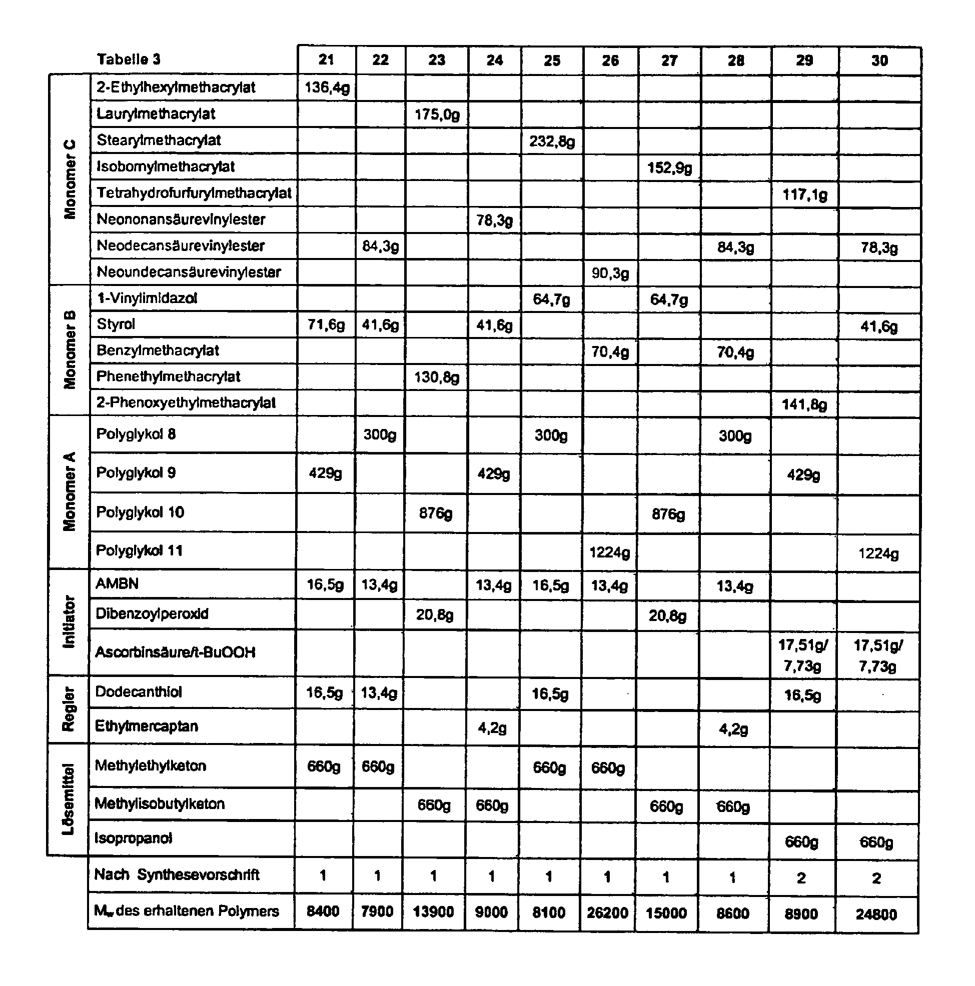

Zusammensetzung Monomer A aus Tabellen 1 bis 3:

| | |
|---|---|
| Polyglycol 1 | Polyalkylenglykolmonovinylether (Formel (I), k = 0, n = 0, m = 11,5; (A-O) entspricht (CH₂CH₂O)), Molmasse ca. 550 g/mol |
| Polyglykol 2 | Polyalkylenglykolmonovinylether (Formel (I), k = 0, n = 0, m = 24; (A-O) entspricht (CH₂CH₂O)), Molmasse ca. 1100 g/mol |
| Polyglykol 3 | Polyalkylenglykolmonovinylether (Formel (I), k = 0, n = 0, m = 44,5; (A-O) entspricht (CH₂CH₂O)), Molmasse ca. 2000 g/mol |
| Polyglykol 4 | Polyalkylenglykolmonovinylether (Formel (I), k = 0, n = 0, m = 135,4; (A-O) entspricht (CH₂CH₂O)), Molmasse ca. 6000 g/mol |
| Polyglykol 5 | Polyalkylenglykolmonoallylether (Formel (I), k = 1, n = 0, m = 6,6; (A-O) entspricht (CH₂CH₂O)), Molmasse ca. 350 g/mol |
| Polyglykol 6 | Polyalkylenglykolmonoallylether (Formel (I), k = 1, n = 0, m = 10; (A-O) entspricht (CH₂CH₂O)), Molmasse ca. 500 g/mol |
| Polyglykol 7 | Polyalkylenglykolmonoallylether (Formel (I), k = 1, n = 0, m = 21,4; (A-O) entspricht (CH₂CH₂O)), Molmasse ca. 1000 g/mol |
| Polyglykol 8 | Polyalkylenglykolmonoallylether (Formel (I), k = 1, Verhältnis Ethylenoxid/Propylenoxid 6:4 (statistisch polymerisiert), Molmasse ca. 500 g/mol |
| Polyglykol 9 | Polyalkylenglykolmonoallylether (Formel (I), k = 1, Verhältnis Ethylenoxid (B-O)/Propylenoxid (A-O) 11:4 (Blockcopolymer), Molmasse ca. 750 g/mol |
| Polyglykol 10 | Polyalkylenglykolmonoallylether (Formel (I), k = 1, Verhältnis Ethylenoxid (B-O)/Propylenoxid (A-O) 20:10 (Blockcopolymer), Molmasse ca. 1500 g/mol |
| Polyglykol 11 | Polyalkylenglykolmonoallylether (Formel (I), k = 1, Verhältnis Ethylenoxid/Propylenoxid 20:20 (statistisch polymerisiert), Molmasse ca. 2100 g/mol |

### Anwendungsbeispiel

### Herstellung einer Pigmentpräparation

Das Pigment wurde, entweder als Pulver, Granulat oder als Presskuchen, zusammen mit den Dispergiermitteln und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert. Die anschließende Feindispergierung erfolgte mit Hilfe einer Perlmühle (z. B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgte. Im Anschluss wurde die Dispersion mit entionisiertem Wasser auf die gewünschte Pigmentendkonzentration eingestellt, die Mahlkörper abgetrennt und die Pigmentpräparation isoliert.

### Beurteilung einer Pigmentpräparation

Die Bestimmung der Farbstärke und des Farbtons erfolgte nach DIN 55986. Für den "Rub-Out-Test" wurde die Dispersionsfarbe nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche dann kräftiger gefärbt ist als die angrenzende, nicht nachbehandelte Fläche (der "Rub-Out-Test" wird in DE 2 638 946 beschrieben). Die Farbstärke und die Verträglichkeiten mit dem einzufärbenden Medium wurde mit einer Dispersionsfarbe für Außenanstriche ermittelt (Wasserbasis, 20 % TiO₂).

Die Viskosität wurde mit einem Kegel-Platte-Viskosimeter (Roto Visco 1) der Firma Haake bei 20 °C bestimmt (Titankegel: Ø 60 mm, 1 °), wobei die Abhängigkeit der Viskosität von dem Schergefälle in einem Bereich zwischen 0 und 200 s⁻¹ untersucht wurde. Die Viskositäten wurden bei einem Schergefälle von 60 s⁻¹ gemessen.

Für eine Beurteilung der Lagerstabilität der Dispersionen wurde die Viskosität direkt nach der Herstellung der Präparation gemessen, sowie nach vierwöchiger Lagerung bei 50 °C.

Die in dem folgenden Beispiel beschriebene Pigmentpräparation wurde nach dem zuvor beschriebenen Verfahren hergestellt, wobei die folgenden Bestandteile in den angegebenen Mengen so verwendet wurden, dass 100 Teile der Pigmentpräparation entstehen. In dem nachfolgenden Beispiel bedeuten Teile Gewichtsteile:

| | |
|---|---|
| 50 Teile | C.I. Pigment Gelb 1 |
| 6 Teile | Polymer aus Synthesebeispiel 3 (Tabelle) |
| 1 Teil | Benetzer |
| 10 Teile | Propylenglykol |
| 0,2 Teile | Konservierungsmittel |
| 32,8 Teile | Wasser |

Die Pigmentpräparation hat in der Weißdispersion eine hohe Farbstärke und ist stabil. Der Rub-Out-Test zeigt keine Farbstärkeunterschiede im Vergleich zur nachgeriebenen Fläche. Die Dispersion erweist sich als gut fließfähig und lagerstabil, da sie nach 28 Tagen Lagerung bei 50 °C ebenfalls noch gut fließfähig ist. Die Viskosität beträgt nach der Herstellung 494 mPa·s.

## Patentansprüche

1. Copolymer, erhältlich durch Polymerisation der Monomere (A), (B) und (C), wobei
(A) ein Monomer der Formel (I) ist 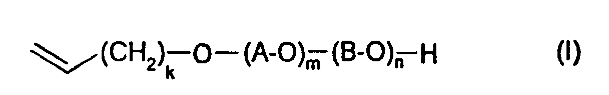 wobei
A für C₂- bis C₄-Alkylen und
B für ein von A unterschiedliches C₂- bis C₄-Alkylen steht,
k der Zahl 0 oder 1 entspricht,
m eine Zahl von 0 bis 500 ist;
n eine Zahl von 0 bis 500 ist,
wobei die Summe m + n gleich 1 bis 1000 ist;
(B) ein ethylenisch ungesättigtes Monomer ist, das eine aromatische Gruppe enthält; und
(C) ein ethylenisch ungesättigtes Monomer ist, das einen Alkylrest enthält.

2. Copolymer nach Anspruch 1, **dadurch gekennzeichnet, dass** der molare Anteil von Monomer (A) 1 bis 80 %, von Monomer (B) 0,1 bis 80 %, und von Monomer (C) 0,1 bis 80 % beträgt.

3. Copolymer nach Anspruch 1 oder 2, **dadurch gekennzeichnet, dass** der molare Anteil von Monomer (A) 10 bis 70 %, von Monomer (B) 10 bis 60 %, und von Monomer (C) 10 bis 60 % beträgt.

4. Copolymer nach einem oder mehreren der Ansprüche 1 bis 3, **dadurch gekennzeichnet, dass** die Alkylenoxideinheiten (A-O)ₘ und (B-O)ₙ blockartig angeordnet sind.

5. Copolymer nach einem oder mehreren der Ansprüche 1 bis 4, **dadurch gekennzeichnet, dass** das Monomer (B) eine Verbindung der Formel (IIa) oder (IIb) ist: 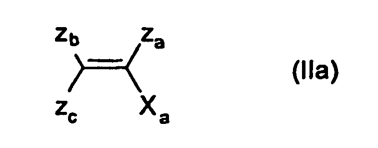 wobei
Xₐ für einen aromatischen oder araliphatischen Rest mit 3 bis 30 C-Atomen steht, der gegebenenfalls eines oder mehrere der Heteroatome N, O und S enthält,
Zₐ für H oder (C₁-C₄)-Alkyl steht,
Z_{b} für H oder (C₁-C₄)-Alkyl steht, und
Z_{c} für H oder (C₁-C₄)-Alkyl steht; 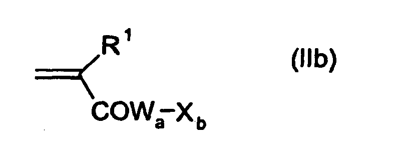
wobei
R¹ für Wasserstoff oder Methyl steht,
X_{b} für einen aromatischen oder araliphatischen Rest mit 3 bis 30 C-Atomen steht, der gegebenenfalls eines oder mehrere der Heteroatome N, O und S enthält,
Wₐ für Sauerstoff oder die Gruppe NH steht.

6. Copolymer nach einem oder mehreren der Ansprüche 1 bis 5, **dadurch gekennzeichnet, dass** das Monomer (C) eine Verbindung der Formel (IIIa) oder (IIIb) ist: 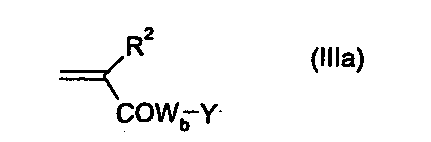 wobei
R² für Wasserstoff oder Methyl steht,
Y für einen aliphatischen Kohlenwasserstoffrest mit 1 bis 30 C-Atomen steht, der linear oder verzweigt, oder auch cyclisch sein kann, und die Heteroatome O, N und/oder S enthalten kann und auch ungesättigt sein kann,
W_{b} für Sauerstoff oder die Gruppe NH steht; 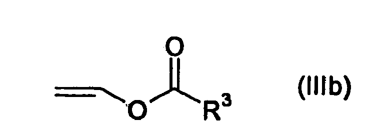
wobei
R³ für einen aliphatischen Kohlenwasserstoffrest mit 1 bis 30 C-Atomen steht, der linear oder verzweigt, oder auch cyclisch sein kann, und die Heteroatome O, N und/oder S enthalten kann und auch ungesättigt sein kann.

7. Copolymer nach einem oder mehreren der Ansprüche 1 bis 6, **dadurch gekennzeichnet, dass** das Monomer (B) Styrol, 1-Vinylimidazol, Benzylmethacrylat, 2-Phenoxyethylmethacrylat oder Phenethylmethacrylat ist.

8. Copolymer nach einem oder mehreren der Ansprüche 1 bis 7, **dadurch gekennzeichnet, dass** das Monomer (C) ein Alkylester oder Alkylamid der Acryl- oder Methacrylsäure ist, wobei Alkyl die Bedeutung Methyl, Ethyl, Propyl, Butyl, Isobutyl, 2-Ethylhexyl, 2-Ethoxyethyl, Myristyl, Lauryl und Octadecyl hat.

9. Verfahren zur Herstellung eines Copolymers nach einem oder mehreren der Ansprüche 1 bis 8, wobei die Monomere (A), (B) und (C) radikalisch polymerisiert werden.

10. Verwendung eines Copolymers nach einem oder mehreren der Ansprüche 1 bis 9 als Dispergiermittel, insbesondere für Pigmente und Füllstoffe.

## Claims

1. A copolymer obtainable by polymerization of the monomers (A), (B) and (C), where
(A) is a monomer of formula (I) 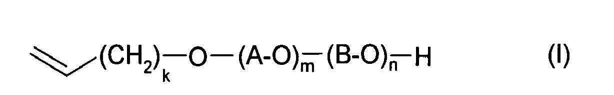 where
A represents C₂- to C₄-alkylene,
B represents a C₂- to C₄-alkylene other than A,
k equals 0 or 1,
m is from 0 to 500,
n is from 0 to 500,
provided the sum total of m + n is from 1 to 1000;
(B) is an ethylenically unsaturated monomer which contains an aromatic group; and
(C) is an ethylenically unsaturated monomer which contains an alkyl radical.

2. The copolymer as claimed in claim 1, wherein the molar fraction of monomer (A) is 1 to 80%, the molar fraction of monomer (B) is 0.1 to 80% and the molar fraction of monomer (C) is 0.1 to 80%.

3. The copolymer as claimed in claim 1 or 2, wherein the molar fraction of monomer (A) is 10 to 70%, the molar fraction of monomer (B) is 10 to 60% and the molar fraction of monomer (C) is 10 to 60%.

4. The copolymer as claimed in one or more of claims 1 to 3, wherein the alkylene oxide units (A-O)ₘ and (B-O)ₙ are arranged blocklike.

5. The copolymer as claimed in one or more of claims 1 to 4, wherein the monomer (B) is a compound of formula (IIa) or (IIb) : 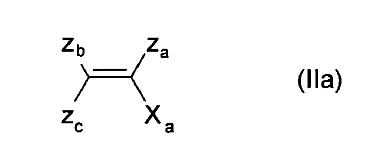 where
Xa represents an aromatic or araliphatic radical having 3 to 30 carbon atoms, which optionally contains one or more of the heteroatoms N, O and S,
Zₐ represents H or (C₁-C₄)-alkyl,
Z_{b} represents H or (C₁-C₄)-alkyl, and
Z_{c} represents H or (C₁-C₄)-alkyl ; 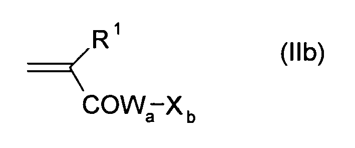
where
R¹ represents hydrogen or methyl,
Xb represents an aromatic or araliphatic radical having 3 to 30 carbon atoms, which optionally contains one or more heteroatoms N, O and S,
Wa represents oxygen or the group NH.

6. The copolymer as claimed in one or more of claims 1 to 5, wherein the monomer (C) is a compound of formula (IIIa) or (IIIb): 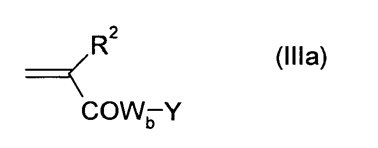 where
R² represents hydrogen or methyl,
Y represents an aliphatic hydrocarbyl radical having 1 to 30 carbon atoms, which may be linear or branched or else cyclic, and may contain the heteroatoms O, N and/or S and also be unsaturated,
W_{b} represents oxygen or the group NH; 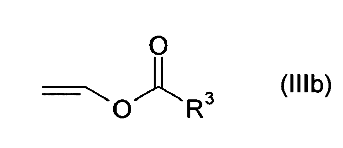
where
R³ represents an aliphatic hydrocarbyl radical having 1 to 30 carbon atoms, which may be linear or branched or else cyclic, and may contain the heteroatoms O, N and/or S and also be unsaturated.

7. The copolymer as claimed in one or more of claims 1 to 6, wherein the monomer (B) is styrene, 1-vinylimidazole, benzyl methacrylate, 2-phenoxyethyl methacrylate or phenethyl methacrylate.

8. The copolymer as claimed in one or more of claims 1 to 7, wherein the monomer (C) is an alkyl ester or alkylamide of acrylic or methacrylic acid, where alkyl is selected from the group consisting of methyl, ethyl, propyl, butyl, isobutyl, 2-ethylhexyl, 2-ethoxyethyl, myristyl, lauryl and octadecyl.

9. A process for preparing a copolymer as claimed in one or more of claims 1 to 8, comprising free-radically polymerizing the monomers (A), (B) and (C).

10. The use of a copolymer as claimed in one or more of claims 1 to 9 as a dispersant, particularly for pigments and fillers.

## Revendications

1. Copolymère, pouvant être obtenu par polymérisation des monomères (A), (B) et (C), où
(A) est un monomère de formule (I) 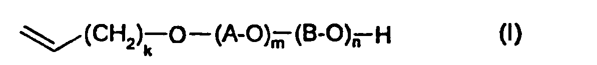 où
A représente C₂-C₄-alkylène et
B représente C₂-C₄-alkylène différent de A,
k correspond au nombre 0 ou 1,
m vaut un nombre de 0 à 500,
n vaut un nombre de 0 à 500,
où la somme de m + n est égale à 1 à 1000 ;
(B) représente un monomère éthyléniquement insaturé qui contient un groupe aromatique ; et
(C) représente un monomère éthyléniquement insaturé qui contient un radical alkyle.

2. Copolymère selon la revendication 1, **caractérisé en ce que** la proportion molaire du monomère (A) est de 1 à 80%, celle du monomère (B) est de 0,1 à 80%, et celle du monomère (C) est de 0,1 à 80%.

3. Copolymère selon la revendication 1 ou 2, **caractérisé en ce que** la proportion molaire du monomère (A) est de 10 à 70%, celle du monomère (B) est de 10 à 60%, et celle du monomère (C) est de 10 à 60%.

4. Copolymère selon l'une ou plusieurs des revendications 1 à 3, **caractérisé en ce que** les unités d'oxyde d'alkylène (A-O)ₘ et (B-O)ₙ sont disposées en blocs.

5. Copolymère selon l'une ou plusieurs des revendications 1 à 4, **caractérisé en ce que** le monomère (B) est un composé de formule (IIa) ou (IIb) : 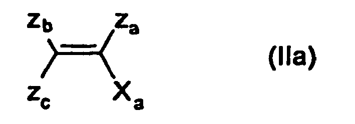 où
Xₐ représente un radical aromatique ou araliphatique comprenant 3 à 30 atomes de carbone, qui contient le cas échéant un ou plusieurs des hétéroatomes N, O et S,
Zₐ représente H ou (C₁-C₄)-alkyle,
Z_{b} représente H ou (C₁-C₄)-alkyle, et
Z_{c} représente H ou (C₁-C₄)-alkyle ; 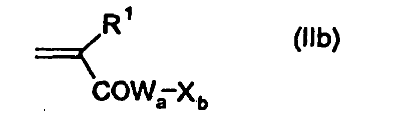
où
R¹ représente hydrogène ou méthyle,
X_{b} représente un radical aromatique ou araliphatique comprenant 3 à 30 atomes de carbone, qui contient le cas échéant un ou plusieurs des hétéroatomes N, O et S,
Wₐ représente oxygène ou le groupe NH.

6. Copolymère selon l'une ou plusieurs des revendications 1 à 5, **caractérisé en ce que** le monomère (C) est un composé de formule (IIIa) ou (IIIb) : 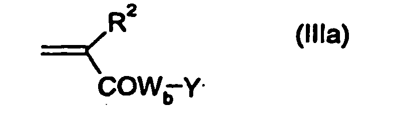 où
R² représente hydrogène ou méthyle,
Y représente un radical hydrocarboné aliphatique comprenant 1 à 30 atomes de carbone, qui peut être linéaire ou ramifié ou également cyclique et qui peut contenir les hétéroatomes O, N et/ou S et qui peut également être insaturé,
W_{b} représente oxygène ou le groupe NH ; 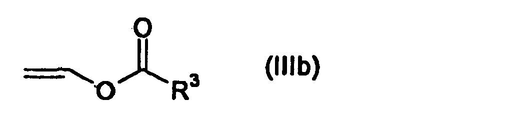
où
R³ représente un radical hydrocarboné aliphatique comprenant 1 à 30 atomes de carbone, qui peut être linéaire ou ramifié ou également cyclique et qui peut contenir les hétéroatomes O, N et/ou S et qui peut également être insaturé.

7. Copolymère selon l'une ou plusieurs des revendications 1 à 6, **caractérisé en ce que** le monomère (B) est le styrène, le 1-vinylimidazole, le méthacrylate de benzyle, le méthacrylate de 2-phénoxyéthyle ou le méthacrylate de phénéthyle.

8. Copolymère selon l'une ou plusieurs des revendications 1 à 7, **caractérisé en ce que** le monomère (C) est un ester alkylique ou un alkylamide de l'acide acrylique ou méthacrylique, où alkyle présente la signification méthyle, éthyle, propyle, butyle, isobutyle, 2-éthylhexyle, 2-éthoxyéthyle, myristyle, lauryle et octadécyle.

9. Procédé pour la préparation d'un copolymère selon l'une ou plusieurs des revendications 1 à 8, où les monomères (A), (B) et (C) sont polymérisés par voie radicalaire.

10. Utilisation d'un copolymère selon l'une ou plusieurs des revendications 1 à 9 comme dispersant, en particulier pour des pigments et des charges.
